# EUROPÄISCHE PATENTSCHRIFT

(11) **EP 1 108 347 B1**
(45) Veröffentlichungstag und Bekanntmachung des Hinweises auf die Patenterteilung: **17.03.2010**
(21) Anmeldenummer: 99953612.1
(22) Anmeldetag: 26.08.1999
(51) Int. Cl.: H05B 41/24, H01J 65/04

(54) **BETRIEBSVERFAHREN UND ELEKTRONISCHES VORSCHALTGERAT FUR ENTLADUNGSLAMPE MIT DIELEKTRISCH BEHINDERTEN ENTLADUNGEN**
ELECTRONIC BALLAST FOR A DISCHARGE LAMP COMPRISING DIELECTRICALLY IMPEDED DISCHARGES
BALLAST ELECTRONIQUE POUR LAMPE A DECHARGES DIELECTRIQUEMENT EMPECHEES

(30) Priorität: 28.08.1998 DE 19839336
(43) Veröffentlichungstag der Anmeldung: 20.06.2001
(73) Patentinhaber: Osram Gesellschaft mit beschränkter Haftung, 81543 München (DE); Hitzschke, Lothar, 81737 München (DE); Vollkommer, Frank, 82131 Buchendorf (DE)
(72) Erfinder: WAMMES, Klaus, D-67577 Alsheim (DE); HITZSCHKE, Lothar, D-81737 München (DE); VOLLKOMMER, Frank, D-82131 Buchendorf (DE)
(86) Internationale Anmeldenummer: PCT/DE1999/002681
(87) Internationale Veröffentlichungsnummer: WO 2000/013204

(56) Entgegenhaltungen:
- EP-A- 0 604 902
- EP-A- 0 781 078
- EP-A- 0 817 542
- EP-A- 0 975 204
- WO-A-94/23442
- WO-A-98/35536
- WO-A-99/46963
- GB-A- 2 047 486

## Beschreibung

### Technisches Gebiet

Die vorliegende Erfindung bezieht sich auf ein Betriebsverfahren und ein entsprechendes elektronisches Vorschaltgerät für eine Entladungslampe. Dabei beziehen sich das Betriebsverfahren und das Vorschaltgerät auf einen bestimmten Entladungslampentypus, bei dem sogenannte dielektrisch behinderte Entladungen zur Lichterzeugung ausgenutzt werden. Zur Erzeugung solcher Entladungen befindet sich zwischen zumindest einer der Entladungselektroden und dem Entladungsmedium der Entladungslampe eine dielektrische Schicht. Auf die Technologie der Entladungslampen mit dielektrisch behinderten Entladungen wird hier nicht im einzelnen eingegangen und diesbezüglich verwiesen auf den Stand der Technik.

### Stand der Technik

Die technische Entwicklung hat sich in diesem Gebiet bislang hauptsächlich mit der Entladungslampe als solcher beschäftigt. Eine Ausnahme hierzu ist eine frühere Patentanmeldung zu einem einschlägigen Betriebsverfahren mit einer gepulsten Wirkleistungseinkopplung in die Entladungslampe. Hierzu wird verwiesen auf die WO 94/23442, deren Offenbarungsgehalt hierdurch Inbezugnahme mit inbegriffen ist. Das dort dargestellte Betriebsverfahren bildet die Grundlage für die im Folgenden beschriebene Erfindung.

Die vorliegende Erfindung beschäftigt sich dabei mit der Umsetzung der in dem zitierten Stand der Technik grundsätzlich beschriebenen Betriebsweise in ein elektrotechnisch besonders vorteilhaftes Betriebsverfahren und ein zugehöriges elektronisches Vorschaltgerät. Bei der Entwicklung eines solchen Betriebsverfahrens und Vorschaltgeräts wird allgemein angestrebt, verschiedene Qualitätskriterien in einem möglichst günstigen Gesamtkompromiß zu erfüllen. Zunächst soll ein elektronisches Vorschaltgerät möglichst leistungseffizient arbeiten, um zusammen mit dem Wirkungsgrad der Lampe einen guten Gesamtwirkungsgrad eines Beleuchtungssystems aus Entladungslampe und Vorschaltgerät zu erzielen.

Ein zweiter Gesichtspunkt betrifft die durch ein entsprechendes Betriebsverfahren ermöglichte kompakte und leichte Bauweise eines elektronischen Vorschaltgeräts, das in soweit auch für den Einbau bei beengten Platzverhältnissen oder Gewichtsbeschränkungen geeignet ist. Dies spielt gerade bei den hinsichtlich der Entladungslampen mit dielektrisch behinderter Entladung besonders interessanten Anwendungsgebieten eine wesentliche Rolle. Beispiele sind Hinterleuchtungssysteme für Flachbildschirme oder Kopierlampen, auf die im weiteren Verlauf der Beschreibung noch eingegangen wird.

Schließlich sollen wirtschaftliche Vorteile im Hinblick auf die Massenherstellungskosten und die Lebensdauer und Ausfallhäufigkeit erzielt werden.

Zum Stand der Technik wird ferner verwiesen auf folgende Druckschriften: Die WO-A-98/35536 offenbart ein Betriebsverfahren für stille Entladungslampen, bei dem bei steigenden wie auch bei fallenden Flanken der Lampenspannung Ausschläge im Lampenstrom dargestellt sind, denen jeweils Zündungen zugeschrieben werden. Die EP-A-604902 betrifft einen Plasmabildschirm, in dessen Zellen nach einem sogenannten "memory-Prinzip" Bilddateninhalte eingeschrieben, gehalten und gelöscht werden können. Dazu wird zwischen Einschreibpulsen, Aufrechterhaltungspulsen und Löschpulsen unterschieden.

Der Erfindung liegt das technische Problem zugrunde, ausgehend von der technischen Lehre der WO 94/23442 ein besonders günstiges Betriebsverfahren unter Verwendung eines Vorschaltgeräts und ein hierzu ausgelegtes Beleuchtungssystem und Vorschaltgerät anzugeben.

Hierzu ist erfindungsgemäß vorgesehen ein Betriebsverfahren für eine Entladungslampe mit einer dielektrischen Schicht zwischen zumindest einer Elektrode und einem Entladungsmedium unter Verwendung eines Vorschaltgeräts mit einem leistungsversorgten Primärkreis, einem die Entladungslampe enthaltenden Sekundärkreis sowie einem den Primärkreis mit dem Sekundärkreis verbindenden Transformator, bei welchem Verfahren dem Sekundärkreis aus dem Primärkreis, über den Transformator ein Spannungspuls eingeprägt wird, der zu einer eine Zündung bewirkenden äußeren Spannung an der Entladungslampe und zu einer inneren Gegenpolarisation in der Entladungslampe führt, und nach der Zündung durch die äußere Spannung ein ausreichend früher Gegenspannungspuls aus dem Primärkreis über den Transformator in den Sekundärkreis eingeprägt wird und die die noch an der Entladungslampe anliegende äußere Spannung bewirkende Ladung abzieht, bis die innere Gegenpolarisation in der Entladungslampe zu der Rückzündung führt, dadurch gekennzeichnet, daß der Spannungspuls nach dem Sperrwandlerprinzip und der Gegenspannungspuls nach dem Flußwandlerprinzip aus dem Primärkreis in den Sekundärkreis eingeprägt wird.

Ferner betrifft die Erfindung ein Vorschaltgerät, das für das erfindungsgemäße Betriebsverfahren ausgelegt ist, sowie ein Beleuchtungssystem mit einer Entladungslampe und einem solchen Vorschaltgerät.

Die verschiedenen abhängigen Ansprüche betreffen dabei bevorzugte Ausgestaltungen der Erfindung.

Erfindungsgemäß ist also ein Betriebsverfahren für eine Entladungslampe der bereits beschriebenen Art vorgesehen, bei dem ein Vorschaltgerät Verwendung findet Für die Zwecke dieser Erfindung besteht dieses Vorschaltgerät, bei dem es sich vorzugsweise um ein elektronisches Vorschaltgerät handelt, aus einem Primärkreis, der in einer hier nicht weiter interessierenden Weise mit Leistung versorgt ist, und einem Sekundärkreis, in den die Lampe geschaltet werden soll bzw. geschaltet ist. Der Primärkreis und der Sekundärkreis sind gekoppelt über einen Transformator, über den aus dem Primärkreis in den Sekundärkreis Leistung eingekoppelt werden kann.

Es ist nun vorgesehen, über den Transformator einen Spannungspuls in den Sekundärkreis einzukoppeln, der zu einer äußeren Spannung an der Entladungslampe führt. Für den der Erfindung zugrunde liegenden Gedanken ist das darauffolgende Verhalten der Entladungslampe selbst von Bedeutung. Es hat sich nämlich herausgestellt, daß es in den hier betrachteten Entladungslampen mit dielektrisch behinderten Entladungen zu einer Gegenpolarisation in der Entladungslampe als dielektrische Reaktion auf die äußere Spannung und als Resultat einer durch eine äußere Spannung gezündeten Entladung kommt.

Und zwar kommt es nach Erreichen der Zündspannung zur Ausbildung von Entladungen in dem Entladungsmedium, wie dies in der bereits in Bezug genommenen Grundlagenanmeldung zu dem Betriebsverfahren näher beschrieben ist. Infolgedessen bewegen sich Ladungsträger zu der dielektrischen Schicht auf einer der Elektroden und stauen sich zunehmend auf der dielektrischen Schicht auf. Hierdurch wird eine innere Gegenpolarisation gegen das äußere Feld geschaffen, die solange ansteigt, bis in dem Entladungsmedium kein Gesamtfeld mehr vorliegt, so daß auch kein Strom mehr durch die Lampe fließen kann. Damit hat sich das Entladungsmedium von einem als Ohmscher Verbraucher wirkenden Verhalten - wenngleich mit zeitveränderlichem Widerstand - zu einem sich als Kapazität darstellenden elektrischen Verhalten verändert.

Hinzu kommt, daß mit dem Entladungsmedium weitere Kapazitäten in Reihe geschaltet sind, und zwar insbesondere durch die eine oder mehrere dielektrische Schichten auf den Elektroden.

Ausgehend von diesem physikalischen Verhalten der Entladungslampe besteht der Grundgedanke der Erfindung nun darin, diese innere Gegenpolarisation nicht als störenden Effekt aufzufassen, sondern funktional in das Betriebsverfahren und auch in das Funktionsprinzip des zugehörigen Vorschaltgeräts zu integrieren. In diesem Sinn sieht das erfindungsgemäße Betriebsverfahren vor, die äußere Spannung an der Entladungslampe, die ursprünglich die eben beschriebene Gegenpolarisation verursacht hat, ausreichend schnell von der Entladungslampe wieder abzuziehen, um die innere Gegenpolarisation zu einer weiteren Zündung in umgekehrter Richtung nach der durch die äußere Spannung bewirkten ersten Zündung führen zu lassen. Diese zweite Zündung wird hier als Rückzündung bezeichnet und geht nicht, jedenfalls nicht vollständig, auf eine äußere Spannung, sondern vielmehr, jedenfalls zumindest zum Teil, auf die innere Gegenpolarisation zurück.

In dieser Anmeldung wird der Übersichtlichkeit der Darstellung halber so argumentiert, daß die äußere Spannung an der Entladungslampe oder die innere Gegenpolarisation eine Zündung bewirken. Der Vollständigkeit halber muß hierzu jedoch noch ergänzt werden, daß das Zündverhalten der Lampe von einer Zahl weiterer Parameter abhängt. Insbesondere spielt die Flankensteilheit bzw. die Ableitung beim Aufbau einer Spannung an der Lampe bzw. eines Feldes in der Lampe eine wesentliche Rolle. Dies bedeutet daß beispielsweise eine Zündung infolge einer äußeren Spannung an der Entladungslampe bei kleineren Spannungswerten erfolgt, wenn diese äußere Spannung sehr schnell aufgebaut wird. Dieses im Grunde empirische Resultat läßt sich wohl dadurch erklären, daß die Elektroden dem Feldanstieg schlechter folgen können, eventuell zusätzlich dadurch, daß mit steilerem Spannungsanstieg und damit größerem Anteil hochfrequenter Fourierkomponenten an dem Spannungsverlauf die Hochfrequenzleitfähigkeit insbesondere des Dielektrikums verbessert und damit das tatsächlich in dem Entladungsmedium herrschende Feld vergrößert wird.

Auch andere Zeitparameter spielen eine Rolle, etwa die sogenannte Totzeit zwischen den einzelnen Wirkleistungspulsen. Je länger diese Totzeit gewählt ist, um so geringer ist die am Ende der Totzeit verbliebene Restionisation und um so höher ist damit die für eine erneute Zündung erforderliche Spannung.

Im weiteren Verlauf dieser Anmeldung werden diese Zusammenhänge nicht weiter problematisiert, weil sie mit dem Prinzip dieser Erfindung nicht direkt verbunden sind. Man muß sich jedoch im Bewußtsein halten, daß neben den reinen Spannungswerten und den Lampenparametern für das Zünd-und das Rückzündverhalten auch die zeitlichen Parameter des Betriebsverfahrens eine wesentliche Rolle spielen.

Hinsichtlich der zeitlichen Reihenfolge und den im Folgenden verwendeten Bezeichnungen erste Zündung und Rückzündung ist anzumerken, daß sich dieses Betriebsverfahren von dem Entladungslampenstart abgesehen natürlich auf einen kontinuierlichen Entladungsbetrieb richtet, so daß auf die Rückzündung wiederum eine "Hinzündung", also erste Zündung, folgt. Bei der Beschreibung der Erfindung wird jedoch nur eine Grundeinheit dieses wiederholten Ablaufs betrachtet, wobei der Einfachheit halber die "erste" Zündung auf die äußere Spannung bezogen wird. Dabei ist es übrigens nicht unbedingt notwendig, daß das Betriebsverfahren insgesamt im strengen Sinne periodisch ist.

Dementsprechend betrifft die Erfindung auch ein Beleuchtungssystem, womit hier ein System aus einer Entladungslampe und einem Vorschaltgerät gemeint ist, die zu einem Betrieb nach dem erfindungsgemäßen Betriebsverfahren ausgelegt sind. Dazu muß das Vorschaltgerät in geeigneter Weise auf die jeweilige Entladungslampe abgestimmt sein, hinsichtlich der von der Erfindung beabsichtigten Funktionsweise vor allem hinsichtlich der Kapazität.

Wesentliche Vorteile der erfindungsgemäßen Rückzündung sind die folgenden: Zunächst wird die gewissermaßen unvermeidlicherweise in die Gegenpolarisation gelangte Energie zumindest zu einem erheblichen Teil durch die Rückzündung in die Lichterzeugung umgesetzt und damit die Gesamtenergieausnutzung verbessert. Zwar könnte die Gegenpolarisation auch in geeigneter Weise so abgebaut werden, daß die darin gespeicherte Energie über den Transformator in den Primärkreis zurückfließen kann, jedoch ist dies natürlich mit insgesamt gesteigerten Verlusten verbunden, weil der in den Primärkreis zurückgelangte Anteil wiederum über den Transformator und den Sekundärkreis in die Entladungslampe gelangen muß, um nutzbar gemacht zu werden.

Des weiteren ergibt sich aus der verbesserten Energieausnutzung und insbesondere auch im Vergleich zu einem Abbau der Gegenpolarisation in Form einer Rückführung in den Primärkreis, daß die Schaltung des Vorschaltgeräts bei einer gegebenen Entladungslampenleistung kleiner ausgelegt sein kann. Dies folgt einfach daraus, daß mit Hilfe der Erfindung mit einer auf geringere Leistungen hin ausgelegten Primärkreisschaltung die gleiche Entladungslampenleistung versorgt werden kann, und zwar durch die bessere Energieausnutzung auf der Sekundärkreisseite und durch das Entfallen oder die Verringerung der Notwendigkeit, auf der Sekundärkreisseite nicht "verbrauchte" Energiebeträge wieder auf die Primärkreisseite zurückzuführen. In dem Umfang einer Verbesserung der Energieausnutzung als solche, kann auch die Sekundärkreisseite auf geringere Leistungen hin ausgelegt sein.

Schließlich hat sich auch herausgestellt, daß die Rückzündung für die Entladungsphysik in der Entladungslampe selbst von Vorteil ist, indem sie die örtlichen Verteilungen von verschiedenen chemischen Spezies und Ladungsträgern homogenisiert. Damit ist die erfindungsgemäße Betriebsweise mit ersten Zündungen folgenden Rückzündungen nicht in dem Sinn zu verstehen, daß aus elektrotechnischen Gründen Rückzündungen gewissermaßen in Kauf genommen werden, sondern daß sie sowohl aus der Perspektive der Physik des Entladungsmediums als auch aus elektrotechnischer Sicht eine besonders günstige Verwirklichung der hier zugrundeliegenden gepulsten Betriebsweise gemäß der in Bezug genommenen Anmeldung darstellt.

Aus der Sicht der Erfinder ist es zum Verständnis der der Erfindung zugrunde liegenden Effekte hilfreich, sich klar zu machen, daß in den von der Erfindung in Betracht gezogenen Entladungslampen im Vergleich zu Metallen typischerweise um viele Größenordnungen geringere Ladungsträgerkonzentrationen auftreten, so daß äußere Felder nur unter Zurücklegung vergleichsweise größerer Strecken durch die jeweils beweglichen Ladungsträger durch ein Gegenfeld kompensiert werden können. Aus diesen im Vergleich zu quasi instantan abschirmenden Metallen sehr viel größeren Strekken ergeben sich Zeitverzögerungen, von denen sich herausgestellt hat, daß sie im Bereich der typischen Pulsfrequenzen der hier in Betracht gezogenen gepulsten Betriebsweise bereits einen wesentlichen Effekt darstellen können.

Bei der Erfindung geht es also darum, in der Zeitspanne zwischen der ersten Zündung und der Rückzündung den Sekundärkreis zu einem Abziehen der äußeren Spannung von der Entladungslampe zu bringen. Dies kann insbesondere, wie im weiteren ausgeführt, durch einen an geeigneter Stelle eingekoppelten Puls geschehen, der die erfindungsgemäße Ladungsverschiebung im Sekundärkreis unterstützt. Andererseits kann dies auch durch ein Durchschwingenlassen des Sekundärkreises als isolierter Schwingkreis oder in anderer Weise geschehen. Es wird Bezug genommen auf den Offenbarungsgehalt der Parallelanmeldung "Elektronisches Vorschaltgerät für Entladungslampe mit dielektrisch behinderten Entladungen" derselben Anmelderin vom selben Anmeldetag und dem Aktenzeichen 198 39 329.6, veröffentlicht als WO-A-00/13472.

Nach einem spezielleren Gesichtspunkt der Erfindung wird die Rückzündung in der Entladungslampe über den Aspekt der verbesserten Energieausnutzung hinaus noch zu einer weiteren Funktion eingesetzt. Diese weitere Funktion betrifft die Entmagnetisierung des Transformators in dem Vorschaltgerät.

Hierzu muß zunächst erklärt werden, daß bei einem Vorschaltgerät mit dem beschriebenen Aufbau aus einem Primärkreis und einem über einen Transformator an den Primärkreis angeschlossenen Sekundärkreis bei einer Wirkleistungseinkopplung in den Sekundärkreis in gepulster Weise, jedenfalls bei Verwendungen mit einer erfindungsgemäßen Entladungslampe, eine gewisse Restmagnetisierung in dem Transformator nach der in der Sprache dieser Anmeldung ersten Zündung verbleibt. Im Stand der Technik sind sehr zahlreiche verschiedene Möglichkeiten vorgeschlagen worden, solche Restmagnetisierungen abzubauen, um nicht bei Dauerbetrieb durch immer wieder aufeinander aufbauende Restmagnetisierungsbeträge den Transformator direkt in eine magnetische Sättigung zu treiben. Z. B. können der Primärseite des Transformators parallel geschaltete Schaltungen aus Entmagnetisierungsspulen und Dioden verwendet werden. Ein Beispiel für eine relativ aufwendige Lösung zeigt die US 4 739 285. Jedenfalls weisen konventionelle Vorschaltgeräte aus dem Stand der Technik grundsätzlich in irgendeiner Weise gestaltete Entmagnetisierungsschaltungen auf.

Erfindungsgemäß wird nun im Zusammenhang mit dem Abziehen der äußeren Spannung bzw. der diese bewirkenden Ladung von der Entladungslampe in Vorbereitung der Rückzündung gleichzeitig die Restmagnetisierung in dem Transformator zumindest zu einem erheblichen Teil abgebaut. Damit können, je nach genauer Ausführung der Schaltung, Entmagnetisierungsschaltungen nach dem Stand der Technik entweder ganz entfallen oder doch im Hinblick auf deutlich kleinere Restmagnetisierungsbeträge ausgelegt werden. Insbesondere ist es aber auch möglich, ohne jede Entmagnetisierungsschaltung zu arbeiten, indem die Sekundärkreisseite durch die Rückzündung den der Restmagnetisierung entsprechenden Energiebetrag aus dem Transformator weitgehend verbraucht und ein eventuell verbleibender kleiner Energiebetrag gegebenenfalls in geeigneter Weise durch den Transformator selbst in den Primärkreis zurückgeführt werden kann, jedoch nicht muß. Dies wird im Folgenden noch weiter erläutert.

Festzustellen ist dabei schließlich, daß die Restmagnetisierung nach der Rückzündung bei dieser Erfindung keineswegs auf Null zurückgeführt sein muß. Es ist, allgemeiner gesprochen, nicht erforderlich, daß der Sekundärkreis nach der Rückzündung völlig energiefrei wird. Entscheidend ist nur, daß ein Sättigungszustand des Transformators vermieden wird. Weiterhin darf eine eventuell an der Entladungslampe verbleibende Spannung - unter Berücksichtigung der Steilheit der auftretenden Flanken - natürlich nicht die Zündspannung erreichen. In diesem Sinn sind die zugehörigen Ansprüche so zu verstehen, daß zumindest ein Beitrag zu der Entmagnetisierung des Transformators geleistet werden soll.

Ein Vorteil der erfindungsgemäßen Entmagnetisierung des Transformators durch den Abbau der äußeren Spannung an der Entladungslampe und die Rückzündung ist zunächst die Möglichkeit, Entmagnetisierungsschaltungen entweder ganz zu vermeiden oder kleiner auszulegen. Bevorzugt ist der Fall, daß das erfindungsgemäße Vorschaltgerät keine gesonderte Entmagnetisierungsschaltung aufweist. Dadurch wird die Schaltung nicht nur effizienter, sondern auch einfacher und preiswerter. Durch den Wegfall der mit einer konventionellen Entmagnetisierungsschaltung verbundenen Bauteile kann auch ein Gewinn an Zuverlässigkeit erreicht werden. Insbesondere hat es sich jedoch als wesentlicher Vorteil der Erfindung herausgestellt, daß entsprechende Vorschaltgeräte ganz erheblich viel kleiner und leichter als konventionelle Vergleichsschaltungen gestaltet werden können. Dies ist für manche Anwendungsfälle, beispielsweise in den bereits erwähnten Bereichen von Kopierlampen oder von Flachbildschirmhinterleuchtungen, von ganz erheblichem Vorteil.

Schließlich kann durch den Transformator auch eine vollständige galvanische Trennung zwischen der Primärkreisseite und der Sekundärkreisseite erreicht werden, wenn keine solchen Entmagnetisierungsschaltungen vorliegen, die diese beiden Kreise verbinden. Dies ist aus Sicherheitsgründen sehr erwünscht

Nach dem kennzeichnenden Teil des Anspruchs 1 bezieht sich die Erfindung auf eine konkrete Schaltungsfonn für das bereits allgemein beschriebene Betriebsverfahren. Dabei wird aus dem Primärkreis über den Transformator in den Sekundärkreis nach dem Erzeugen der ersten Zündung ein dem ersten Spannungspuls in der Polarität entgegengesetzter zweiter Spannungspuls eingeprägt. Dieser zieht die durch den ersten Spannungspuls - mit einer entsprechenden Umladezeitverzögerung - auf die Entladungslampe gebrachte Ladung bzw. die nach der ersten Zündung noch auf der Entladungslampe befindliche Ladung von der Entladungslampe ab und führt somit zu einer Rückzündung, im allgemeinen unter zusätzlicher Energieeinkopplung in den Sekundärkreis. Die innere Gegenpolarisation kann diesem äußeren Spannungsabfall nicht schnell genug folgen, so daß das ursprünglich im Entladungsmedium verschwindende elektrische Feld mit entgegengesetzter Polarität zu der ursprünglichen Feldrichtung wieder ansteigt und dabei die Zündfeldstärke überschreitet. Hierbei ist im Prinzip denkbar, daß die Ladung noch praktisch vollständig an der Entladungslampe liegt, oder auch daß sie durch eine Schwingung des Sekundärkreises zu einem gewissen Teil bereits von der Entladungslampe abgeflossen ist.

Ob die Ladung zu dem Zeitpunkt des Gegenspannungspulses bereits zu einem erheblichen Teil von der Entladungslampe abgeflossen ist, hängt neben dem zeitlichen Abstand zwischen dem ersten Spannungspuls und dem Gegenspannungspuls auch von der Schwingfrequenz des Sekundärkreises in dieser Zwischenphase ab. In dieser Phase ist der Sekundärkreis jedenfalls bei der bereits erwähnten Primärkreistaktung ein weitgehend isolierter Schwingkreis, insbesondere wenn erfindungsgemäß keine zusätzlichen Entmagnetisienmgsschaltungen zwischen Primärkreis und Sekundärkreis vorgesehen sind. Bei der Erfindung wird jedoch der Fall betrachtet, daß das Abfließen der Ladung nicht bereits ohne weiteren Gegenspannungspuls zu einer Rückzündung in der Entladungslampe geführt hat.

Dabei bestehen im Hinblick auf die zwischen der ersten Zündung durch die äußere Spannung und der Rückzündung infolge des Gegenspannungspulses ablaufende Zeitspanne zwei verschiedene Möglichkeiten für die Erfindung. In dem einen Fall wird diese Zeitspanne ausreichend kurz gewählt, so daß die erste Zündung und die Rückzündung im Sinne der hier betrachteten gepulsten Betriebsweise der Entladungslampe als einheitlicher Wirkleistungspuls aufgefaßt werden können.

In dem anderen Fall ist dieser zeitliche Abstand so groß, daß bereits diese Zeitspanne als Totzeit des gepulsten Wirkleistungsverfahrens betrachtet werden kann. Dazu sollte sie insbesondere in dem Bereich von 5 µsek bis 1 msek liegen. In diesem Fall ist es bei der mit der Einkopplung des Gegenspannungspulses verbundenen spezielleren Ausgestaltung der Erfindung notwendig, daß nicht bereits das im Sinne einer Eigenschwingung des Sekundärkreises erfolgte Abfließen der Ladung von der Entladungslampe zu einer Rückzündung geführt hat Vielmehr muß dieses Abfließen ausreichend langsam geschehen. Daher ist diese Betriebsweise für niedrige Eigenfrequenzen des Sekundärkreises, vorzugsweise unterhalb von 20 kHz, insbesondere unterhalb von 10 bzw. 5 kHz, besonders geeignet. Solche niedrigen Eigenfrequenzen des Sekundärkreises treten insbesondere bei sehr großen Lampenkapazitäten, also vor allem bei sehr großen Lampen auf.

Die Erfindung bezieht sich somit auch auf ein Vorschaltgerät, das zur Erzeugung der ersten Zündung als Sperrwandler arbeitet und daraufhin als Flußwandler den zweiten äußeren Spannungspuls für die Rückzündung erzeugt.

Bei dem Sperrwandler wird durch eine Aufladung des Transformators durch den Primärkreis Energie in dem Transformator gespeichert; wobei jedoch auf der Sekundärkreisseite noch nicht die Zündspannung der Entladungslampen überschritten wird. Ein plötzliches Unterbrechen des primärkreisseitigen Stromflusses durch den Transformator erzeugt eine entsprechend große Induktionsspannung im Sekundärkreis, die die Entladungslampe durchzünden läßt. Bei dem Sperrwandler entsteht die zur Lampenzündung führende Spannung im Sekundärkreis also zu einem Zeitpunkt, zu dem primärkreisseitig kein Strom durch den Transformator fließt.

Der nun folgende Gegenspannungspuls wird durch ein Wiederzulassen des Stromflusses durch den Transformator auf der Primärkreisseite und eine dementsprechend zeitlich unmittelbar gekoppelte Induktionsspannung im Sekundärkreis erzeugt. Wegen dieser direkten zeitlichen Kopplung zwischen dem primärkreisseitigen Stromfluß durch den Transformator und der Induktionsspannung, die zur Zündung in der Entladungslampe führt, arbeitet das Vorschaltgerät hier als Flußwandler.

In Zusammenhang damit, daß bei der Aufladung des Transformators vor der sperrwandlerweisen ersten Zündung die Zündspannung der Entladungslampe noch nicht überschritten werden soll, gilt für den zu der Rückzündung führenden Gegenspannungspuls jedoch, daß hier durch die in der Entladungslampe bereits vorliegende Gegenpolarisation keine wiederum gleich große Höhe des Gegenspannungspulses - unter Berücksichtigung der verschiedenen Steilheiten - erforderlich ist. Es ist also nicht notwendig, den Stromfluß in dieser Flußwandlerphase auf der Primärkreisseite gegenüber der vorherigen Aufladung in besonderer Weise zu verstärken bzw. umgekehrt bei der Transformatoraufladung abzuschwächen.

Das weitere Verfahren verläuft bevorzugt so, daß der primärkreisseitige Stromfluß durch den Transformator weiter zugelassen wird, bis der Primärkreis wieder zu einer Aufladung des Transformators schreitet. In der Zwischenzeit kann ein Rückfluß nach der Rückzündung noch auf der Sekundärkreisseite verbliebener Restenergie über den Transformator in den Primärkreis stattfinden.

Es ist natürlich auch möglich, diesen zeitlichen Übergang von der Energierückspeisung bis zu dem Wiederaufladen des Transformators durch zwischenzeitliches Unterbrechen des primärkreisseitigen Stromflusses durch den Transformator zu verlängern, wenn dies aus bestimmten Gründen, etwa zur Erzielung einer entsprechend langen Totzeit der Wirkleistungseinkopplung, gewünscht ist. Dies verkompliziert jedoch das Betriebsverfahren, so daß es bevorzugt ist, die Auslegung so zu wählen, daß die Energierückspeisung zusammen mit dem Wiederaufladen des Transformators insgesamt einen geeigneten zeitlichen Umfang hat.

Wenn andererseits diese Energierückspeisung relativ lange dauert und man die Totzeit bis zur nächsten Wirkleistungseinkopplung zeitlich verkürzen möchte, so können erfindungsgemäß zusätzliche Rückspeiseschaltungen vorgesehen sein, um die Rückspeisung schneller zu Ende zu führen. Hierzu sind beispielsweise mit entsprechenden Diodenschaltungen versehene Zweige zwischen dem Sekundärkreis und dem Primärkreis geeignet. Dies kann vor allem dann relevant sein, wenn bereits die Zeitspanne zwischen der ersten Zündung und der Rückzündung als Totzeit betrachtet wird und der Sekundärkreis dementsprechend niederfrequent schwingt.

Die bisherige Beschreibung ging von einer Steuerung des primärkreisseitigen Stromflusses durch den Transformator aus. Dazu ist ein entsprechender Schalter in dem Primärkreis zur Primärkreistaktung des Vorschaltgeräts vorzusehen. Die Erfindung kann jedoch auch allgemeiner verstanden werden als im Sinne einer Primärkreistaktung, etwa durch eine Taktung mit einer Schalteinrichtung im Sekundärkreis.

Im Fall der bislang behandelten Primärkreistaktung ergibt sich erfindungsgemäß im einfachsten Fall eine einfache Umschaltung des entsprechenden Primärkreisschalters zwischen einem leitenden Zustand zum Aufladen des Transformators in einen nichtleitenden Zustand zur Erzeugung des ersten Spannungspulses für die erste Zündung mit dem Sperrwandler wieder zurück in den leitenden Zustand zur Erzeugung des zweiten Gegenspannungspulses für die Rückzündung. Dabei kann der leitende Zustand, wie bereits ausgeführt, bis zum nächsten Arbeitszyklus beibehalten werden. Ein einfacher Aus-/Einschaltvorgang des Primärkreisschalters führt also bereits zu dem erfindungsgemäßen Kombinationsprinzip aus Sperrwandler und Flußwandler mit einer Hinzündung und einer Rückzündung in der Entladungslampe.

Hinsichtlich der Erzeugung eines ausreichend schnellen Gegenspannungspulses in der Flußwandlerphase ist es von Bedeutung, daß die Leistungsquelle in dem Primärkreis entsprechend niederohmig ist. Hierzu wird vorzugsweise ein Speicherkondensator verwendet, wobei keramische Mehrschichtkondensatoren eine hinsichtlich des inneren Widerstandes besonders günstige Wahl sind. Diese keramischen Mehrschichtkondensatoren haben ferner den Vorteil, eine gewisse Tiefpaßfilterwirkung zu zeigen und damit die Rückstreuung von hochfrequenten Störungen aus dem Vorschaltgerät in das Versorgungsnetz zu verringern. Ferner zeigen sie wesentlich längere Lebensdauern als die üblicherweise eingesetzten Elektrolytkondensatoren.

Wie bereits verschiedentlich erwähnt, kann durch einen Schalter in dem Primärkreis und entsprechend gesteuerten Stromfluß durch die Primärkreisseite des Transformators das gesamte Vorschaltgerät und damit auch der Betrieb der Entladungslampe getaktet werden. Eine solche Primärkreistaktung ist bei dieser Erfindung eine bevorzugte Wahl. Es muß jedoch angemerkt werden, daß auch andere Möglichkeiten einer Taktung des Vorschaltgerätes und der Entladungslampe im Bereich der Erfindung liegen, etwa durch eine Schalteinrichtung im Sekundärkreis.

Eine weitere bevorzugte Ausgestaltung der Erfindung betrifft eine Sekundärwicklung des Transformators mit einem Mittenabgriff, bei der durch eine Wahl des Mittenabgriffpotentials als erdfreies Bezugspotential im Sekundärkreis und Versorgung der Entladungslampe durch die zu diesem Bezugspotential positiven und negativen Spannungen an den äußeren Abgriffen der Sekundärwicklung Sicherheitsverbesserungen und eine Verbesserung der elektromagnetischen Verträglichkeit erreicht werden können. Dies liegt im wesentlichen daran, daß im Sekundärkreis im Hinblick auf die Hochspannungsgefährdung und auf die elektromagnetische Abstrahlung im wesentlichen die halbe tatsächlich an die Entladungslampe angelegte Spannung auftritt. Des weiteren heben sich die abgestrahlten Störsignale in Folge der gegenläufigen Flanken teilweise auf.

Bislang war von einem aus dem Primärkreis über den Transformator in den Sekundärkreis eingeprägten Spannungspuls die Rede, der zu einer äußeren Spannung an der Entladungslampe führt. Dabei ist die Erfindung nicht darauf festgelegt, ob zeitlich aufeinanderfolgende äußere Spannungspulse an der Entladungslampe immer das gleiche Vorzeichen haben oder in irgendeiner Weise einen Vorzeichenwechsel durchführen. In vielen Fällen ist es bevorzugt, mit einem unipolaren Betriebsverfahren zu arbeiten, bei dem die durch einen Spannungspuls erzeugte äußere Spannung an der Entladungslampe immer das gleiche Vorzeichen hat. Dabei ist also die Stromrichtung einer "Hinzündung" immer die gleiche. Ein Vorteil dieses Verfahrens liegt z. B. darin, daß hinsichtlich der Elektrodenstruktur der Entladungslampe zwischen Kathoden und Anoden unterschieden werden kann, wobei nur die Anoden eine dielektrische Schicht zur Trennung von dem Entladungsmedium aufweisen müssen.

Andererseits kann aber auch ein bipolares Betriebsverfahren bevorzugt sein, bei dem das Vorzeichen der äußeren Spannung an der Entladungslampe von Spannungspuls zu Spannungspuls alternierend wechselt. Allerdings müssen dabei Entladungslampen verwendet werden, bei denen alle Elektroden als Anode geeignet sind, also eine dielektrische Schicht aufweisen.

Ein Vorteil eines bipolaren Betriebsverfahrens kann beispielsweise in einer über das erfindungsgemäße Rückzündungsprinzip noch weiter hinausgehenden Symmetrisierung der Entladungsverhältnisse in der Lampe liegen. Damit werden durch asymmetrische Entladungsverhältnisse hervorgerufene Probleme besonders wirkungsvoll vermieden, z. B. Ionenwanderungen im Dielektrikum, die zu einer Schwärzung führen können, oder die Effizienz der Entladung verschlechternde Raumladungsakkumulationen.

Im Hinblick auf das erfindungsgemäße Betriebsverfahren ist es, wenn ein bipolarer Betrieb beabsichtigt ist, bevorzugt, hierzu für eine Richtungsumkehr des den Spannungspuls im Sekundärkreis bewirkenden primärkreisseitigen Stromes in dem Transformator zu sorgen. Dies ist im allgemeinen einfacher als entsprechende elektrotechnische Maßnahmen zur Richtungsumkehr auf der Sekundärkreisseite zu treffen.

Insbesondere kann der Transformator hierzu zwei primärkreisseitige Wicklungen aufweisen, die jeweils einer der beiden Stromrichtungen zugeordnet sind, also für einen Primärkreisstrom nur einer der beiden Richtungen verwendet werden. Das bedeutet, daß die beiden primärkreisseitigen Wicklungen alternierend mit Strom beaufschlagt werden. Beispielsweise kann dies durch Verwendung zweier taktender Schalter in dem Primärkreis geschehen, die jeweils den Strom durch eine zugeordnete der beiden Wicklungen takten. Damit ist jeder der beiden Stromrichtungen ein eigener Taktschalter und eine eigene primärkreisseitige Wicklung des Transformators zugeordnet.

Wenn ein erfindungsgemäßes Vorschaltgerät an einer Wechselstromquelle verwendet wird, kann es von Vorteil sein, im Hinblick auf die beiden primärkreisseitigen Stromrichtungen zwei Speicherkondensatoren zu verwenden, die halbperiodenweise alternierend aus der Wechselstromquelle aufgeladen werden. Es werden also die Wechselstromhalbperioden eines Vorzeichens für einen der Speicherkondensatoren und die Wechselstromhalbperioden des anderen Vorzeichens für den anderen Speicherkondensator verwendet. Aus diesen beiden Speicherkondensatoren können dann die Ströme für jeweils eine Richtung entnommen werden. Dies kann zusammen mit der geschilderten doppelten Ausführung der Primärkreiswicklung des Transformators geschehen, jedoch ist eine solche hier eigentlich nicht notwendig. Vielmehr kann eine einzige primärkreisseitige Wicklung durch entsprechende Schalter alternierend von den beiden Speicherkondensatoren versorgt werden, wobei jeder Speicherkondensator jeweils einer Stromrichtung zugeordnet ist. Zur Speisung der Speicherkondensatoren aus der Wechselstromquelle kann eine entsprechende Gleichrichterschaltung verwendet werden, deren Einzelheiten dem Fachmann ohne weiteres klar sind.

### Beschreibung der Zeichnungen

Im Folgenden wird die Erfindung anhand konkreter Ausführungsbeispiele im einzelnen erläutert. Die dabei offenbarten Merkmale können auch jeweils einzeln oder in anderen als den dargestellten Kombinationen erfindungswesentlich sein. In den Figuren zeigt:
- Figur 1: ein schematisches Blockschaltbild eines erfindungsgemäßen Be- leuchtungssystems;
- Figur 2: ein schematisches Ersatzschaltbild für die Entladungslampe aus Figur 1;
- Figur 3: ein stark vereinfachtes Diagramm zur Veranschaulichung des Zu- sammenhangs zwischen der äußeren Spannung und der inneren Gegenpolarisation an und in der Entladungslampe;
- Figur 4: ein stark vereinfachtes Diagramm zur Veranschaulichung des Grundprinzips des erfindungsgemäßen Sperrwandler- Flußwandler-Vorschaltgeräts;
- Figur 5: beispielhafte Meßkurven für einen tatsächlichen Betrieb eines er- findungsgemäßen Sperrwandler-Flußwandler-Vorschaltgeräts;
- Figur 6: ein Diagramm mit weiteren beispielhaften Meßkurven für den tat- sächlichen Betrieb des erfindungsgemäßen Sperrwandler- Flußwandler-Vorschaltgeräts;
- Figur 7: ein Diagramm mit jeweils einer der Meßkurven aus Figur 5 und Figur 6 zur Herstellung einer Korrelation zwischen diesen Figuren; und
- Figur 8: ein Figur 1 entsprechendes schematisches Blockschaltbild eines wei- teren erfindungsgemäßen Beleuchtungssystems.

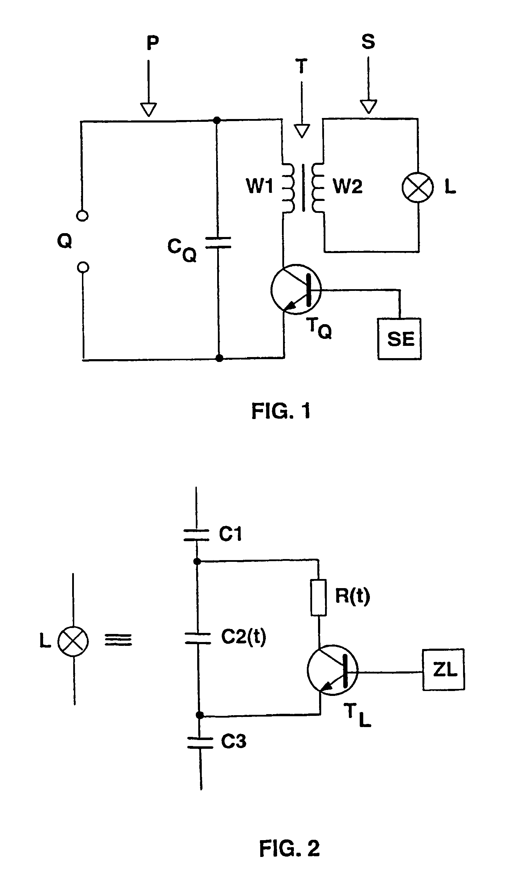

In Figur 1 ist ein schematisches Blockschaltbild für ein erfindungsgemäßes Beleuchtungssystem dargestellt. Darin ist zunächst mit L eine Entladungslampe dargestellt, die für dielektrisch behinderte Entladungen ausgelegt ist. Ein prinzipielles Ersatzschaltbild für die Entladungslampe L wird im Folgenden noch anhand Figur 2 erläutert. Für das Verständnis des erfindungsgemäßen Betriebsverfahrens, Beleuchtungssystems und Vorschaltgeräts ist der tatsächliche Aufbau der Entladungslampe L nicht entscheidend.

Die Entladungslampe L ist in einen Sekundärkreis S geschaltet, der neben der Entladungslampe L eine Sekundärwicklung W2 eines Transformators T enthält.

Die Primärwicklung W1 des Transformators T liegt in einem Primärkreis P, der aus einer Leistungsversorgung Q mit Leistung für den Transformator bzw. die Entladungslampe L versorgt ist.

Ferner liegt in einem der Äste zwischen der Leistungsquelle Q und der Primärwicklung W1 ein schneller Schalter T_{Q}. Dabei handelt es sich um einen Leistungs-MOSFET, der von einer Steuereinrichtung SE geschaltet bzw. gesteuert ist.

Parallel zu der Reihenschaltung aus der Primärwicklung W1 und dem Schalter T_{Q} liegt ein Speicherkondensator C_{Q}. Dieser Speicherkondensator C_{Q} wird von der Quelle Q nachgeladen, gehört im Grunde zu der Quelle Q und dient zum Anlegen einer Spannung an die Primärwicklung W1 abhängig von dem Schaltzustand des Schalters T_{Q}. Es handelt sich dabei um keramische Mehrschichtkondensatoren.

Bei dem erfindungsgemäßen Sperr-/Flußwandler wird zunächst ein Stromfluß durch die Primärwicklung W1 erzeugt, wobei das Wicklungsverhältnis des Transformators T im Bezug auf die Entladungslampe L so ausgelegt ist, daß der Stromfluß durch die Primärwicklung W1 in der Sekundärwicklung W2 und damit unmittelbar an der Entladungslampe L keine für eine erste Zündung ausreichende Spannung induziert. Wird der Schalter T_{Q} durch die Steuereinrichtung SE geöffnet, so bricht der Strom durch die Primärwicklung W1 abrupt ab und erzeugt im Sekundärkreis S einen Zündspannungspuls. Soweit entspricht der Betrieb einem konventionellen Sperrwandler.

Bei Verwendung mit der erfindungsgemäßen Entladungslampe verbleibt in der Sperrwandlerphase nach der Öffnung des Schalters T_{Q} im Sekundärkreis S Energie zumindest in Form einer Restmagnetisierung des Transformators T. Wie bereits in der Beschreibungseinleitung erläutert, sind zum Abbau solcher Restmagnetisierungen konventionellerweise Entmagnetisierungsschaltungen verwendet worden, die z. B. aus einer dritten Wicklung des Transformators T und einer mit dieser Wicklung parallel zu der Reihenschaltung aus der Primärwicklung W1 und dem Schalter T_{Q} geschalteten Diode bestehen könnten. Über eine solche Entmagnetisierungsschaltung könnte dann in der Sperrphase des Schalter T_{Q} die Restmagnetisierung des Transformators T abgebaut werden.

Aus Figur 1 ergibt sich direkt, daß zwischen dem Primärkreis P und dem Sekundärkreis S eine vollständige galvanische Trennung vorliegt. Dies ist von erheblichem Sicherheitsvorteil im Hinblick auf die auf der Sekundärkreisseite vorliegenden hohen Spannungen. Ein weiterer Sicherheitsvorteil kann dadurch erzielt werden, daß die Sekundärwicklung W2 einen (dritten) Mittenabgriff aufweist, der als "floatendes", also erdfreies, Bezugspotential des Sekundärkreises S dienen kann. Wenn demgegenüber an die jeweiligen Elektrodengruppen der Entladungslampe L die positiven und negativen Pulse aus der Sekundärwicklung W2 angelegt werden, liegt an der Entladungslampe L nach wie vor die volle Induktionsspannung an, obwohl in der Sekundärkreisschaltung gegenüber dem Mittenabgriffspotential jeweils nur die halbe maximale Spannung als sicherheitsrelevante Spannung auftritt.

Diese Technik verbessert auch erheblich die elektromagnetische Verträglichkeit hinsichtlich der Abstrahlung aus dem Sekundärkreis. Es wird verwiesen auf die DE 197 34 885 C1.

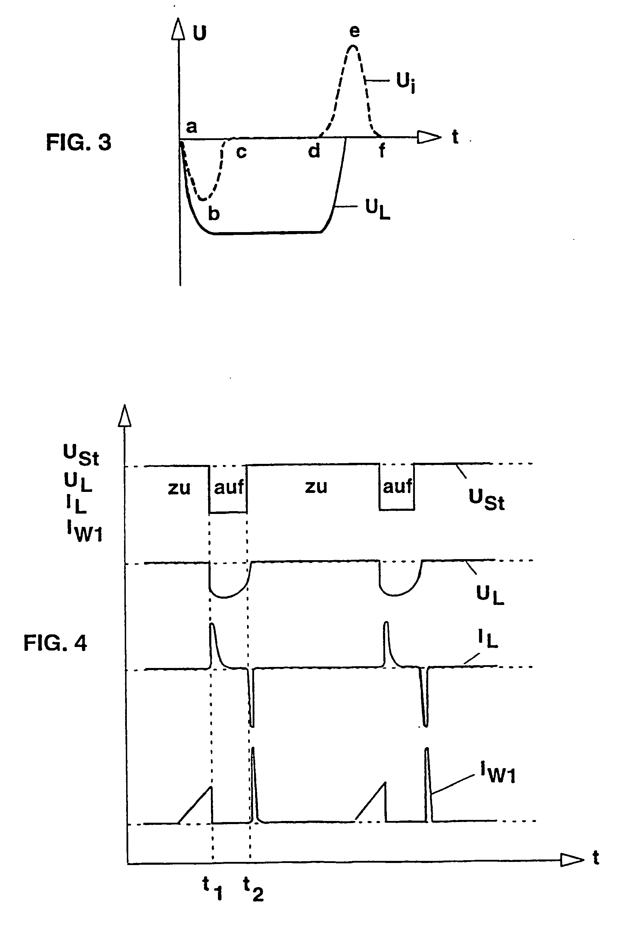

Bevor nun die erfindungsgemäße Ausführung des in Figur 1 dargestellten Beleuchtungssystems beschrieben wird, soll nun zunächst anhand der Figuren 2 und 3 das elektrische Verhalten der Entladungslampe L näher betrachtet werden. Bei dem bereits beschriebenen Zündvorgang nach dem Sperrwandlerprinzip erzeugt der Transformator T nach einer vorhergehenden Aufladung durch einen primärkreisseitigen Transformatorstrom mit dem plötzlichen Unterbrechen dieses Transformatorstroms einen Zündspannungspuls in dem Sekundärkreis S. Dabei ist das Beleuchtungssystem so ausgelegt, daß die Stromableitung des primärkreisseitigen Transformatorstroms zusammen mit dem Übersetzungsverhältnis des Transformators T vor dem Öffnen des Schalters T_{Q} noch nicht zu einer Zündspannung an der Entladungslampe L führt. Erst die hohe Zeitableitung beim Ausschalten des Transformatorstroms im Primärkreis führt zum Erreichen der Zündspannung.

In dem Entladungsmedium der Entladungslampe L bilden sich Entladungen aus, in denen sich Ladungsträger zu der dielektrischen Schicht auf den Elektroden bewegen. In diesem Zusammenhang werden bevorzugt Gasentladungslampen betrachtet, in deren Gasraum die Elektronen die bei weitem beweglicheren Ladungsträger sind und somit die Entladungsdynamik gegenüber den Ionenrümpfen praktisch allein bestimmen. Wenn sich die Elektronen zu der dielektrischen Schicht auf der Anode bewegt haben, stauen sie sich auf der Oberfläche der dielektrischen Schicht auf und schirmen zunehmend das durch die äußere Spannung erzeugte elektrische Feld ab.

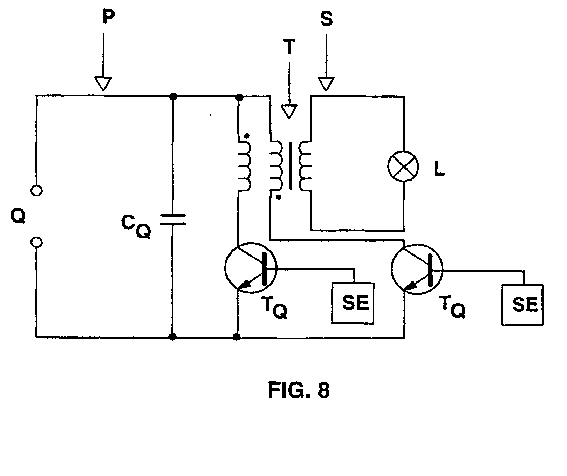

In diesem Zusammenhang ist anzumerken, daß bei der in Figur 1 dargestellten Schaltungsvariante die äußere Spannung immer die gleiche Polarität hat, insoweit eine Anode in der Entladungslampe L festgelegt ist. Dies schränkt, wie bereits erwähnt, die Erfindung jedoch nicht auf unipolare Betriebsverfahren ein; vielmehr sind im Bereich der Erfindung auch bipolare Verfahren und Beleuchtungssysteme inbegriffen, bei denen die Polarität der äußeren Spannung alterniert, die Elektroden also in der Anoden- und der Kathodenrolle abwechselnd betrieben werden. Dies wird anhand der Figur 8 noch erläutert.

Um auf die soeben beschriebene Abschirmung des durch die äußere Spannung erzeugten Feldes zurückzukommen, so erfolgt diese mit einer durch verschiedene Parameter der Entladungslampe L (Druck und Zusammensetzung der Entladungsatmosphäre, Elektrodengeometrie, Abmessungen des Entladungsvolumens...) festgelegten Zeitverzögerung. Diese Abschirmung läßt dann die Entladung in der Entladungslampe L erlöschen, obwohl die äußere Spannung über der notwendigen Zündspannung liegt.

Dies ist in dem vereinfachten Diagramm in Figur 3 zu erkennen. Dort ist auf der Abszisse die Zeit t und auf der Ordinate die Spannung U aufgetragen. Dabei zeigt die durchgezogene Linie die äußere Spannung U_{L} und die gestrichelte Linie die durch die Superposition der äußeren Spannung U_{L} und der inneren Gegenpolarisation resultierende innere Spannung Uᵢ, die dem tatsächlich in dem Entladungsmedium herrschenden Feld entspricht.

Der bisherigen Beschreibung entsprechend ist die äußere Spannung U_{L} von dem Punkt a ausgehend, in dem Diagramm in Figur 3 zu negativen Werten hin, schnell angestiegen, während sich die innere Spannung Uᵢ von a ausgehend zunehmend von der äußeren Spannung U_{L} abgekoppelt hat. In dem Verlauf von a nach b zündet das Plasma. Auch vor der Plasmazündung kommt es zu einer inneren Gegenpolarisation und damit zu einem Abweichen der inneren Spannung Uᵢ von der äußeren Spannung U_{L}. Im Punkt b kehrt die innere Spannung in der Zeitableitung um und wird durch die zunehmende innere Gegenpolarisation wieder kleiner, bis sie bei c den Wert Null erreicht. Bei diesem Beispiel kehrt die innere Spannung Uᵢ um, bevor die äußere Spannung U_{L} ihr Maximum erreicht.

Der besseren Verständlichkeit halber ist das Maximum der äußeren Spannung U_{L} etwas übertrieben breit eingezeichnet. Damit soll verdeutlicht werden, daß in der Lampe Feldfreiheit herrscht und keine Entladung mehr aufrecherhalten werden kann, während die äußere Spannung U_{L} noch große Werte, möglicherweise auch den Maximalwert, aufweist.

In dem Ersatzschaltbild aus Figur 2 bedeutet dies, daß die Entladungslampe L von einem Verbraucherverhalten als zeitabhängiger Ohmscher Widerstand R (t) mit dem Erlöschen der Entladung zu einem rein kapazitiven Verhalten als Kondensator übergewechselt ist. Dies kann man sich in dem Diagramm in Figur 2 durch einen Schaltvorgang des modellhaften Schalters T_{L} vorstellen, der gewissermaßen durch eine Zündlogik ZL der Entladungslampe L gesteuert ist. Die in dem Schaltdiagramm in Figur 2 weiterhin eingezeichneten Kapazitäten C1 und C3 sind Kapazitäten der Elektroden und der zumindest auf den Anoden aufgebrachten dielektrischen Schicht. Dielektrische Schichten können dabei auch sowohl auf den Anoden als auch auf den Kathoden vorliegen.

Im ungezündeten oder bereits nicht mehr gezündeten Zustand wirkt die Entladungslampe L also als Reihenschaltung von Kondensatoren.

Ein wesentlicher Punkt der Erfindung liegt nun darin, das Gesamtsystem (hier als Beleuchtungssystem bezeichnet) aus der Entladungslampe L und dem Vorschaltgerät so abzustimmen, daß die hinsichtlich der Reaktion der inneren Gegenpolarisation auftretende Zeitkonstante für die beabsichtigte Rückzündung ausgenützt werden kann. In Figur 3 ist dies im rechten Teil zu erkennen, bei dem durch das Absinken der äußeren Spannung U_{L} die nicht unmittelbar folgend abnehmende innere Gegenpolarisation dann eine in die entgegengesetzte Richtung, also in Figur 3 zu positiven Spannungen hin, auf ein Niveau oberhalb der Zündspannungsgrenze ansteigende innere Spannung Uᵢ aufbaut. Dies zeigt sich in dem Ansteigen der gestrichelten Kurve der inneren Spannung Uᵢ zwischen den Punkten d und e.

Nach dem Absinken der äußeren Spannung U_{L} fällt die innere Spannung, also in diesem Fall verschwindender äußerer Spannung U_{L} die innere Gegenpolarisation, von dem Punkt e zu dem Punkt f wieder ab. Dabei muß der Punkt des Verschwindens der äußeren Spannung U_{L} nicht unbedingt mit dem Maximum der inneren Spannung Uᵢ zusammentreffen. Wesentlich ist nur, daß die äußere Spannung U_{L} so schnell abfällt, daß die innere Gegenpolarisation vergleichsweise so langsam reagiert, daß die Zündspannung in umgekehrter Richtung ein weiteres Mal überschritten werden kann.

Bei dem in Figur 2 dargestellten Ersatzschaltbild für die Entladungslampe L bedeutet der Zeitverlauf von d bis f in Figur 3 ein Wiedereinschalten des Schalters T_{L} durch die Zündlogik ZL, wobei hier jedoch der zeitabhängige Widerstand R(t) formal negative Werte annimmt.

Figur 4 verdeutlicht nun, wie das in Figur 1 dargestellte Beleuchtungssystem den Abfall der äußeren Spannung U_{L} erfindungsgemäß erreicht. In dieser Figur sind dazu dargestellt die Steuerspannung U_{St} aus der Steuereinrichtung SE für den Schalter T_{Q}, darunter die an der Entladungslampe L anliegende äußere Spannung U_{L}, darunter der Strom I_{L} durch die Entladungslampe L sowie zuunterst der Transformatorstrom I_{W1} durch die Primärwicklung W1.

Durch die Primärkreistaktung mit Hilfe des Schalters T_{Q} und der Steuereinrichtung SE ist die Primärwicklung W1 des Transformators T vor dem mit t₁ bezeichneten Zeitpunkt an leitend in den Primärkreis P geschaltet, zwischen den Zeitpunkten t₁ und t₂ aus dem Primärkreis P herausgeschaltet, nach dem Zeitpunkt t₂ wiederum leitend und periodisch weiter. Als konventioneller Sperrwandler erzeugt das Vorschaltgerät vor dem Zeitpunkt t₁ eine Aufladung des Transformators T durch den Primärkreisstrom I_{W1}, der der Induktivität des Transformators entsprechend im wesentlichen linear ansteigt. Dabei wird die Zündspannungsschwelle der Entladungslampe L unterschritten, wobei in Figur 4 idealisierenderweise kein Ausschlag der Lampenspannung U_{L} dargestellt ist.

Im Zeitpunkt t₁ wird der Schalter T_{Q} geöffnet, womit der primärkreisseitige Stromfluß I_{W1} unterbrochen wird. Dementsprechend ergibt sich eine relativ schnell steigende Induktionsspannung im Sekundärkreis S, die zu einem Durchzünden der Entladungslampe L führt. Dies ist an dem ersten, in Figur 4 positiven Ausschlag des Lampenstromes I_{L} zu erkennen.

Gemäß dem bereits beschriebenen Verhalten der Entladungslampe L wird der Entladungsraum in der Entladungslampe L zunehmend feldfrei, wodurch die Entladung erlischt. Dabei fällt der Lampenstrom I_{L} relativ bald wieder ab, obwohl die an der Entladungslampe L anliegende Spannung U_{L} in der Nähe ihres Maximalwerts bleibt.

Noch bevor die Lampenspannung U_{L} in dem nun als isolierter Schwingkreis wirkende Sekundärkreis S allzu stark abgefallen ist, schaltet die Steuereinrichtung SE den Schalter T_{Q} im Zeitpunkt t₂ wieder in den leitenden Zustand. Es ergibt sich eine Induktionsspannung in der Sekundärwicklung W2 des Transformators T, die die bereits etwas abgefallene Lampenspannung U_{L} stark beschleunigt weiter abfallen läßt. Dementsprechend zündet die diesem Abfall der äußeren Spannung U_{L} nicht ausreichend schnell folgende innere Gegenpolarisation in der Entladungslampe L eine Rückzündung, wie sie durch den in Figur 4 negativen Ausschlag des Lampenstroms I_{L} beim Zeitpunkt t₂ dargestellt ist.

Das aus dem Primärkreis P heraus "getriggerte" schnelle Abfallen der Lampenspannung U_{L} nach dem Zeitpunkt t₂ ist mit einer Ladungsverschiebung im Sekundärkreis S verbunden, weil die Lampenspannung U_{L} mit kapazitiv an der Entladungslampe L gebundenen Ladungen verknüpft ist. Für diesen Umladevorgang ist ein relativ großer kurzer Strompuls auf der Seite des Primärkreises P notwendig, der als schmaler Ausschlag des Primärwicklungsstroms I_{W1} kurz nach dem Zeitpunkt t₂ eingezeichnet ist.

Im Folgenden bleibt der Schalter T_{Q} für eine bestimmte Zeit im leitenden Zustand, woraufhin das soeben beschriebene Verfahren periodisch von neuem beginnen kann. Figur 4 zeigt in stark vereinfachter Weise zwei Perioden des erfindungsgemäßen Betriebsverfahrens. Dabei ist, wie bereits ausgeführt, mit dem Prinzip dieser Erfindung ein relativ kurzer Abstand zwischen den Zeitpunkten t₁ und t₂ und damit zwischen der ersten Zündung und der Rückzündung möglich, während der zeitliche Abstand zwischen einer Rückzündung und der darauf folgenden "Hinzündung" als Totzeit im Sinne der gepulsten Betriebsweise betrachtet wird.

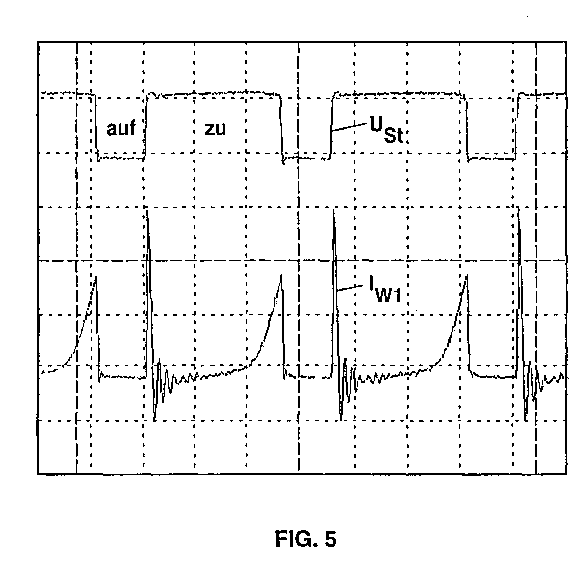

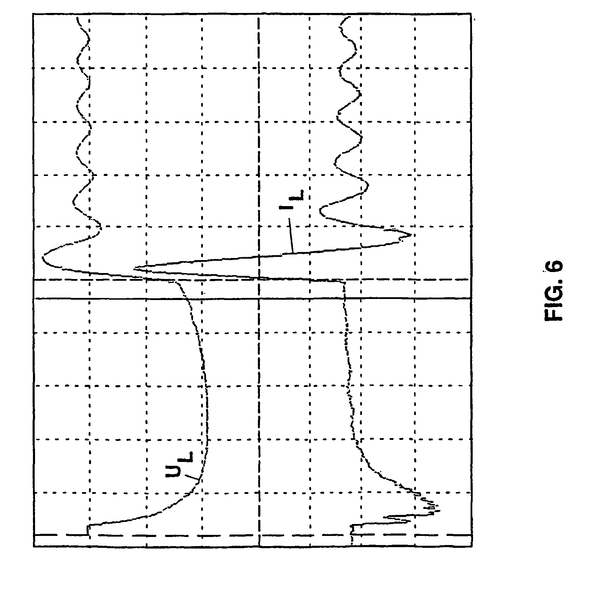

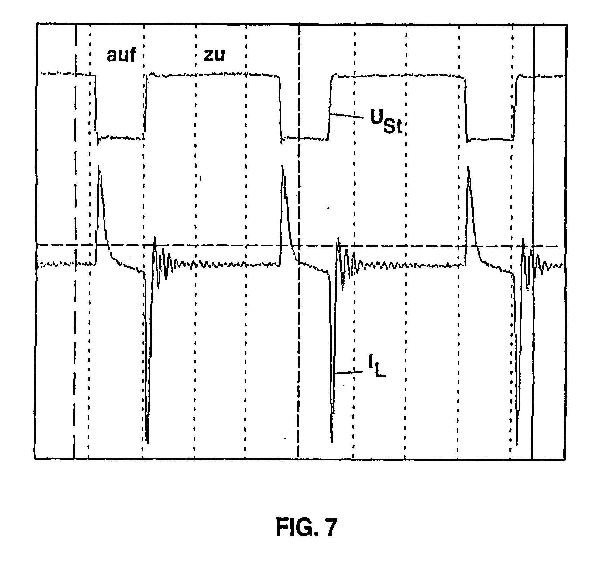

Einen realistischeren Eindruck vermitteln die Figuren 5, 6 und 7, die im Prinzip die gleichen Größen wie Figur 4 zeigen, jedoch ohne die starke Schematisierung in Figur 4. Man beachte den zur Auflösung einiger Details in Figur 6 vergrößerten zeitlichen Maßstab; dort entspricht eine Abszisseneinheit 1 µsek, während die Abszisseneinheit in den Figuren 5 und 7 fünf µs beträgt. Im übrigen ist der Lampenstrom I_{L} in Figur 6 gegenüber den Figuren 4 und 7 invertiert dargestellt.

Zunächst erkennt man in Figur 5 das Primärkreistaktsignals U_{St} im oberen Bereich mit dem dadurch geschalteten Primärwicklungsstrom I_{W1} darunter. Man erkennt wiederum den kontinuierlichen Anstieg des Primärwicklungstroms I_{W1} in der Ladephase vor dem Öffnen des Schalters T_{Q}, den plötzlichen Abfall auf Null, sowie die relativ kurze Umladespitze mit relativ großer Amplitude (bei der Rückzündung) nach dem Wiedereinschalten des Schalters T_{Q}. Soweit entspricht die Darstellung praktisch identisch dem anhand Figur 4 erläuterten Schema. Darüber hinaus zeigen sich in der tatsächlichen Meßkurve zu I_{W1} einige Schwingungen nach der Umladespitze, die jedoch noch vor dem Beginn des nächsten Aufladevorgangs weggedämpft sind. Diese Schwingungen sind parasitärer Natur, beeinträchtigen das erfindungsgemäße Prinzip nicht und sind zu seinem Verständnis auch nicht notwendig.

In Figur 6 erkennt man die beiden weiteren in Figur 4 schematisch dargestellten Größen, nämlich die an der Lampe anliegende äußere Spannung U_{L} sowie den Lampenstrom I_{L}. Eine Korrelation zwischen den Figuren 5 und 6 ermöglicht Figur 7, die den Lampenstrom I_{L} mit dem bereits in Figur 5 dargestellten Primärkreistaktsignal U_{St} zeigt. In Figur 6 ist demgegenüber eine höhere Zeitauflösung gewählt. Die linke Hälfte der Figur 6 zeigt dabei im wesentlichen den zeitlichen Bereich, in dem der Schalter T_{Q} geöffnet ist, also den Bereich zwischen den Zeitpunkten t₁ und t₂ in Figur 4. Dabei zeigt sich zunächst, daß die Lampenspannung U_{L} nach dem Öffnen des Schalters T_{Q} nicht in gleicher Weise schnell steigt, wie der Primärwicklungsstrom I_{W1} sinkt. Dies ist durch die Umladezeitverzögerung in dem Sekundärkreis S infolge der endlichen Ohmschen Widerstände und der Lampenkapazität bedingt.

Mit zunehmendem Betrag der Lampenspannung U_{L} steigt auch der Lampenstrom I_{L} , und zwar zunächst als dielektrischer Verschiebungsstrom und danach infolge der ersten Zündung in der Entladungslampe L.

Noch bevor der Betrag der Lampenspannung U_{L} sein Maximum erreicht hat, bricht die Entladung in der Entladungslampe zusammen und sinkt der Lampenstrom I_{L} wieder auf Null.

Nach einem gewissen Absinken des Betrages der Lampenspannung U_{L} kommt es, wie in den Figuren 5 und 7 gezeigt, wieder zu einem Primärwicklungsstrom I_{W1} und in dessen Folge zu einem sehr schnellen Abfallen der Lampenspannung U_{L}. Unmittelbar damit einhergehend zündet die innere Gegenpolarisation in der Entladungslampe L in entgegengesetzter Richtung, wie Figur 6 deutlich zeigt. Bei diesem Gegenspannungspuls stimmen der Primärwicklungsstrom I_{W1} und der Lampenstrom I_{L} also der Sekundärkreisstrom, sowohl hinsichtlich des zeitlichen Einsetzens als auch ihrer Dauer annähernd überein; hier entnimmt also der Sekundärkreis nach dem Flußwandlerprinzip direkt Energie aus dem Primärkreis. Die Umladezeitverzögerung dazwischen ist in den Figuren kaum zu erkennen.

Auch die Größen U_{L} und I_{L} zeigen die bereits anhand Figur 5 im Bezug auf den Primärwicklungsstrom I_{W1} erläuterten Nachschwingungen. Diese gedämpften Resonanzen entsprechen einer durch den Transformator T gekoppelten Gesamtschwingung des Beleuchtungssystems sowohl im Primärkreis P als auch im Sekundärkreis S und werden durch den relativ scharfen primärseitigen und sekundärseitigen Strom- und Spannungsstoß nach dem Wiedereinschalten des Schalters T_{Q} angestoßen.

Wie bereits in Figur 4 zu sehen, dort jedoch nicht diskutiert, ist der Primärwicklungsstrom I_{W1} nach dem Rückzünden der Entladungslampe L für einen relativ ausgedehnten Zeitraum von etwa 8 µsek relativ klein. Andererseits ist in dieser Zeitspanne der Primärkreisschalter T_{Q} geschlossen. Daraus ergibt sich, daß nach der Rückzündung noch im Sekundärkreis S verbliebene Energie in dieser Zeitspanne über den Transformator T in den Primärkreis, d. h. auf den Speicherkondensator C_{Q}, zurückgespeist wird. Erst wenn die Zurückspeisung abgeschlossen ist, setzt der in Figur 5 deutlich erkennbare Aufladestrom in dem Primärkreis wieder ein. Für diese Rückspeisung ist neben anderen Parametern vor allem die Kapazität der Entladungslampe wesentlich.

Figur 8 zeigt ein schematisches Schaltdiagramm, das weitgehend Figur 1 entspricht. Hier ist jedoch ein Ausführungsbeispiel gezeigt, das für ein bipolares Betriebsverfahren ausgelegt ist. Es werden also äußere Spannungspulse alternierender Polarität an die Entladungslampe L angelegt. Dazu weist der Transformator T zwei Primärwicklungen auf, die in Figur 8 mit entgegengesetztem Wicklungssinn eingezeichnet sind. Jede der Primärwicklungen liegt elektrisch in Reihe mit einem zugeordneten Schalttransistor T_{Q} mit einer eigenen Steuereinrichtung SE. Natürlich können die beiden Steuereinrichtungen auch als zwei Funktionen einer einheitlichen Steuereinrichtung verstanden werden; symbolisiert werden soll nur, daß die beiden Primärwicklungen nicht gemeinsam, sondern alternierend getaktet werden. Durch die Wicklungssinnumkehr zwischen den beiden Primärwicklungen erzeugt der Transformator T bei Taktung der Primärwicklungen jeweils Spannungspulse entgegengesetzter Polarität im Sekundärkreis S. Im übrigen entspricht die Funktion völlig dem vorherigen Ausführungsbeispiel, das in Figur 1 dargestellt ist. Zusammenfassend gesagt, ist bei der Schaltung aus Figur 1 die Baugruppe aus der Primärwicklung W1, dem Schalter T_{Q} und der Steuereinrichtung SE doppelt ausgeführt, wobei durch den Wicklungssinn eine Vorzeichenumkehr bewirkt ist. Die Kurvenverläufe der verschiedenen elektrischen Größen entsprechen - vom Vorzeichenwechsel abgesehen - den Darstellungen in den Figuren 5-7.

In der dargestellten Weise nutzt die Erfindung die speziellen Eigenschaften einer Entladungslampe L mit dielektrisch behinderten Elektroden aus, um ein außerordentlich einfaches elektronisches Vorschaltgerät mit dennoch hervorragenden Betriebseigenschaften zur Verfügung zu stellen. Wesentlich ist dabei das besondere Schaltverhalten des Schalters T_{Q} infolge der Steuerung durch die Steuereinrichtung SE. Ferner spielt die geeignete Abstimmung der elektrotechnischen Größen und des Schaltverhaltens auf die jeweiligen Lampenparameter eine wesentliche Rolle. Daher betrifft die Erfindung neben dem Betriebsverfahren auch das entsprechend abgestimmte Beleuchtungssystem sowie ein mit der erfindungsgemäßen Steuereinrichtung versehenes Vorschaltgerät.

Neben der einfachen Struktur des Vorschaltgeräts hat dieses auch ein ganz erheblich geringeres Bauvolumen und geringeres Gewicht als der vergleichbare Stand der Technik, weil nicht nur weniger Bauteile verwendet werden, sondern auch eine Auslegung auf kleinere Leistungen insbesondere auf der Seite des Primärkreises P möglich ist.

Die kleine Baugröße hat bei einem Konstruktionsbeispiel zu einem Volumen geführt, das sich in einer einer doppelten Streichholzschachtel ähnlichen Gehäusekonstruktion unterbringen läßt. Dies bietet erhebliche Vorteile hinsichtlich der Einbaumöglichkeiten in Flachbildschirmen, bei denen die hier betrachteten Entladungslampen als Hinterleuchtungssysteme von großem Interesse sind. Ein wesentlicher Vorteil solcher Flachbildschirme besteht gerade in ihrer im Vergleich zu konventionellen Elektronenstrahlröhren geringen Baugröße, die folglich aber auch nur ein geringes Volumen für den Einbau eines Hinterleuchtungssystems übrig läßt. Die typischerweise sehr flach ausführbaren Flachstrahler mit dielektrisch behinderten Entladungen können dabei in Zusammenhang mit den erfindungsgemäßen Vorschaltgeräten sehr vorteilhaft eingesetzt werden.

Neben der möglichen Anwendung als Beleuchtungssystem für einen Flachbildschirm soll hier ein weiteres Beispiel angeführt werden. Dazu wird verwiesen auf die DE 19718 395 C1, deren Offenbarungsgehalt in Bezug auf die Strukturen die Eigenschaften der dort beschriebenen Kopierlampe sowie deren Anwendungsmöglichkeiten hier inbegriffen ist. Die dort im Prinzip dargestellte Kopierlampe wurde mit folgenden konkreten Daten bei einem erfindungsgemäßen Beleuchtungssystem erprobt. Bei einer Stabkopierlampe mit einer Länge von 30 cm und einem Außendurchmesser von 8 mm bei einer Rohrwand von 0,6 mm ergab sich eine Schlagweite von 6,5 mm für die dielektrisch behinderten Entladungen. Die dielektrischen Barrieren waren jeweils ca. 170 µm dick und bestanden aus Glaslot, auf dem, wie auf der übrigen Wand, TiO₂ und Leuchtstoff abgeschieden waren. Im Bereich einer Apertur ist das TiO₂ ausgespart. Bei einer Füllung von 160 Torr Xenon ergab sich eine mittlere Lampenleistung von 11 W mit einem erfindungsgemäßen unipolaren elektronischen Vorschaltgerät mit folgenden Bauteilen: Als Speicherkondensator C_{Q} der mit 12 V Gleichspannung versorgten Quelle Q wurden vier keramische Mehrschichtkondensatoren a 10 µF verwendet. Der Schalter T_{Q} war ein Transistor RFP 70 N 80. Der Transformator war ein einzelner ETD 29, N 67 mit einem Sechskammer-Wickelkörper und einem Wicklungsverhältnis von 1:45. In der eben beschriebenen Weise wurde sekundärseitig mit Mittelabgriff gearbeitet, was in Figur 1 der Einfachheit halber nicht dargestellt ist. Es ergab sich ein sehr leichtes und kompaktes elektronisches Vorschaltgerät mit einem Volumen einer doppelten Streichholzschachtel, das zudem eine sehr gute elektromagnetische Verträglichkeit zeigte sowohl hinsichtlich der Abstrahlung aus dem Sekundärkreis als auch hinsichtlich der Rückstreuung ins Netz.

Bei der hier betrachteten Kopierlampe besteht der wesentliche Vorteil darin, daß das elektronische Vorschaltgerät mit der Halteeinrichtung für die Kopierlampe selbst im Kopierbetrieb mitfahren kann, also unmittelbar neben der Kopierlampe montiert sein kann. Durch die erheblich reduzierten Zuleitungslängen und durch die dadurch erzielte Unbeweglichkeit der Zuleitungen ergeben sich wesentliche Vorteile im Hinblick auf die Sicherheit, Dauerhaftigkeit und Zuverlässigkeit der Hochspannungsleitungen zwischen dem elektronischen Vorschaltgerät und der Kopierlampe. Auch reduzieren sich dadurch die Zuleitungskapazitäten, weswegen das elektronische Vorschaltgerät in Zusammenhang mit der geringen Kapazität der Kopierlampe selbst eine sehr gute Pulsform erzeugen kann.

Durch den Wegfall der Notwendigkeit der Montage einer bewegten Hochspannungsleitung entfallen auch viele konventionell notwendige Bauteile und reduziert sich damit der Montageaufwand bei der Herstellung eines Kopiergerätes erheblich.

Analoge Vorteile gelten auch für andere Anwendungen solcher Linearstrahler bei der Dokumentenbeleuchtung in Faxgeräten, Scannern usw.

Ein weiteres wesentliches Anwendungsgebiet der Erfindung liegt im Bereich der elektrischen Versorgung von Flachstrahlern für dielektrisch behinderte Entladungen. Hierzu wird verwiesen auf die WO98/43277.

## Patentansprüche

1. Betriebsverfahren für eine Entladungslampe (L) mit einer dielektrischen Schicht zwischen zumindest einer Elektrode und einem Entladungsmedium
unter Verwendung eines Vorschaltgeräts mit einem leistungsversorgten Primärkreis (P), einem die Entladungslampe (L) enthaltenden Sekundärkreis (S) sowie einem den Primärkreis (P) mit dem Sekundärkreis (S) verbindenden Transformator (T),
bei welchem Verfahren dem Sekundärkreis (S) aus dem Primärkreis (P) über den Transformator (T) ein Spannungspuls eingeprägt wird, der zu einer eine Zündung bewirkenden äußeren Spannung (U_{L}) an der Entladungslampe (L) und zu einer inneren Gegenpolarisation in der Entladungslampe (L) führt,
und nach der Zündung durch die äußere Spannung (U_{L}) ein ausreichend früher Gegenspannungspuls aus dem Primärkreis (P) über den Transformator (T) in den Sekundärkreis (S) eingeprägt wird und die die noch an der Entladungslampe (L) anliegende äußere Spannung (U_{L}) bewirkende Ladung abzieht, bis die innere Gegenpolarisation in der Entladungslampe (L) zu der Rückzündung führt,
**dadurch gekennzeichnet, daß** der Spannungspuls nach dem Sperrwandlerprinzip und der Gegenspannungspuls nach dem Flußwandlerprinzip aus dem Primärkreis (P) in den Sekundärkreis (S) eingeprägt wird.

2. Betriebsverfahren nach Anspruch 1, bei dem nach der Rückzündung durch die innere Gegenpolarisation der primärkreisseitige Stromfluß durch den Transformator (T) weiter zugelassen wird, um einen Rückfluß nach der Rückzündung verbliebener Energie aus dem Sekundärkreis (S) in den Primärkreis (P) zu ermöglichen, bis es wieder zu einer Einprägung des Spannungspulses in den Sekundärkreis (S) kommt.

3. Betriebsverfahren nach einem der vorstehenden Ansprüche, bei dem der Gegenspannungspuls so früh in den Sekundärkreis (S) eingeprägt wird, daß die Zündung durch die äußere Spannung (U_{L}) und die Rückzündung als einheitlicher Wirkleistungspuls eines gepulsten Wirkleistungseinkopplungsverfahrens wirken.

4. Betriebsverfahren nach einem der vorstehenden Ansprüche, bei dem die Frequenz der Schwingungen des Sekundärkreises (S) so klein ist und der Gegenspannungspuls so spät in den Sekundärkreis (S) eingeprägt wird, daß die Zeitspanne zwischen der Zündung durch die äußere Spannung (U_{L}) und der Rückzündung als Totzeit eines gepulsten Wirkleistungseinkopplungsverfahrens wirkt.

5. Betriebsverfahren nach einem der vorstehenden Ansprüche, bei dem durch die Rückzündung der Transformator (T) des Vorschaltgeräts entmagnetisiert wird.

6. Betriebsverfahren nach einem der vorstehenden Anspruch, bei dem das elektronische Vorschaltgerät durch einen Schalter (T_{Q}) in dem Primärkreis (P) getaktet wird.

7. Betriebsverfahren nach einem der vorstehenden Ansprüche, bei dem der Primärkreis (P) aus einer Quelle mit keramischen Mehrschichtkondensatoren (C_{Q}) leistungsversorgt wird:

8. Betriebsverfahren nach einem der vorstehenden Ansprüche, bei dem in dem Sekundärkreis (S) ein Mittenabgriff des Transformators (T) als Bezugspotential verwendet wird.

9. Betriebsverfahren nach einem der vorstehenden Ansprüche, bei dem das Vorschaltgerät dazu ausgelegt ist, an die Entladungslampe (L) äußere Spannungen (U_{L}) mit von Spannungspuls zu Spannungspuls alternierendem Vorzeichen anzulegen.

10. Betriebsverfahren nach Anspruch 9, bei dem die Richtung des primärkreisseitigen Stromes (I_{W1}) in dem Transformator (T) von Spannungspuls zu Spannungspuls alterniert.

11. Betriebsverfahren nach Anspruch 10, bei dem der Transformator zwei primärkreisseitige Wicklungen (W1) aufweist, die jeweils einer der beiden Stromrichtungen zugeordnet sind.

12. Betriebsverfahren nach Anspruch 8 und 10, bei dem der Primärkreis zwei Schalter (T_{Q}) aufweist, die jeweils den Strom durch eine der beiden Wicklungen (W1) takten.

13. Betriebsverfahren nach einem der Ansprüche 10 bis 12, bei dem der Primärkreis aus einer Wechselstromquelle versorgt wird, die zwei Speicherkondensatoren halbperiodenweise alternierend lädt, wobei jeder Speicherkondensator jeweils einer der beiden Stromrichtungen zugeordnet ist.

14. Vorschaltgerät für eine Entladungslampe (L) mit einer dielektrischen Schicht zwischen zumindest einer Elektrode und einem Entladungsmedium,
mit einem leistungsversorgten Primärkreis, (P), einem Sekundärkreis (S) für die Entladungslampe (L) sowie einen den Primärkreis (P) mit dem Sekundärkreis (S) verbindenden Transformator (T),
**dadurch gekennzeichnet, daß** das Vorschaltgerät ein kombinierter Sperrwandler/Flußwandler ist und eine Schalteinrichtung (T_{Q}, SE) in dem Primärkreis (P) aufweist, die ausgelegt ist zum Unterbrechen des primärheisseitigen Stromflusses (I_{W1}) durch den Transformator (T) zum Einprägen eines Spannungspulses in den Sekundärkreis (S), um in der Entladungslampe (L) eine eine Zündung bewirkende äußere Spannung (U_{L}) und eine Gegenpolarisation zu erzeugen, und zum dann Wiedereinschalten des primärseitigen Stromflusses (I_{W1}) durch den Transformator (T), um durch einen Gegenspannungspuls die die äußere Spannung (U_{L}) an der Entladungslampe bewirkende Ladung von der Entladungslampe (L) abzuziehen und mit Hilfe der inneren Gegenpolarisation in der Entladungslampe (L) eine Rückzündung zu bewirken.

15. Vorschaltgerät nach Anspruch 14, bei dem der Primärkreis (P) aus einer Quelle (Q) mit keramischen Mehrschichtkondensatoren (C_{Q}) leistungsversorgt wird.

16. Vorschaltgerät nach Anspruch 14 oder 15, bei dem der Transformator (T) sekundärseitig einen Mittenabgriff aufweist.

17. Vorschaltgerät nach Anspruch 14, 15 oder 16, ausgelegt für ein Verfahren nach Anspruch 2 oder 5.

18. Beleuchtungssystem mit einer Entladungslampe (L) mit einer dielektrischen Schicht zwischen zumindest einer Elektrode und einem Entladungsmedium und
einem Vorschaltgerät nach einem der Ansprüche 14-17.

19. Beleuchtungssystem nach Anspruch 18, dazu ausgelegt, daß durch die Rückzündung der Transformator (T) des Vorschaltgeräts entmagnetisiert wird.

20. Beleuchtungssystem nach Anspruch 18 oder 19, bei dem die Eigenfrequenz des Sekundärkreises (S) weniger als 20 kHz beträgt.

## Claims

1. Operating method for a discharge lamp (L) having a dielectric layer between at least one electrode and a discharge medium
using a ballast having a power-supplied primary circuit (P), a secondary circuit (S) containing the discharge lamp (L), and also a transformer (T) which connects the primary circuit (P) to the secondary circuit (S),
in which method a voltage pulse is impressed on the secondary circuit (S) from the primary circuit (P) via the transformer (T), which voltage pulse leads to an external voltage (U_{L}) effecting an ignition across the discharge lamp (L) and to an internal counterpolarization in the discharge lamp (L),
and, after the ignition by the external voltage (U_{L}), a sufficiently early countervoltage pulse is impressed from the primary circuit (P) via the transformer (T) into the secondary circuit (S) and withdraws the charge effecting the external voltage (U_{L}) still present across the discharge lamp (L), until the internal counterpolarization in the discharge lamp (L) leads to the back ignition,
**characterized in that** the voltage pulse is impressed according to the flyback converter principle, and the countervoltage pulse according to the forward converter principle, from the primary circuit (P) into the secondary circuit (S).

2. Operating method according to Claim 1, in which, after the back ignition by the internal counterpolarization, the primary-circuit-side current flow through the transformer (T) is permitted to continue in order to enable a backflow of energy remaining after the back ignition from the secondary circuit (S) into the primary circuit (P) until the voltage pulse is again impressed into the secondary circuit (S).

3. Operating method according to one of the preceding claims, in which the countervoltage pulse is impressed into the secondary circuit (S) so early that the ignition by the external voltage (U_{L}) and the back ignition act as a uniform active power pulse of a pulsed active power coupling-in method.

4. Operating method according to one of the preceding claims, in which the frequency of the oscillations of the secondary circuit (S) is so low, and the countervoltage pulse is impressed into the secondary circuit (S) so late, that the time period between the ignition by the external voltage (U_{L}) and the back ignition acts as the dead time of a pulsed active power coupling-in method.

5. Operating method according to one of the preceding claims, in which the transformer (T) of the ballast is demagnetized by the back ignition.

6. Operating method according to one of the preceding claims, in which the electronic ballast is clocked by a switch (T_{Q}) in the primary circuit (P).

7. Operating method according to one of the preceding claims, in which the primary circuit (P) is supplied with power from a source (Q) with ceramic multilayer capacitors (C_{Q}).

8. Operating method according to one of the preceding claims, in which, in the secondary circuit (S), a center tap of the transformer (T) is used as reference-ground potential.

9. Operating method according to one of the preceding claims, in which the ballast is designed to apply to the discharge lamp (L) external voltages (U_{L}) having a sign which alternates from voltage pulse to voltage pulse.

10. Operating method according to Claim 9, in which the direction of the primary-circuit-side current (I_{W1}) in the transformer (T) alternates from voltage pulse to voltage pulse.

11. Operating method according to Claim 10, in which the transformer has two primary-circuit-side windings (W1), which are respectively assigned to one of the two current directions.

12. Operating method according to Claims 8 and 10, in which the primary circuit has two switches (T_{Q}), which respectively clock the current through one of the two windings (W1).

13. Operating method according to one of Claims 10 to 12, in which the primary circuit is supplied from an alternating-current source which alternately charges two storage capacitors in a half-cycle by half-cycle manner, each storage capacitor respectively being assigned to one of the two current directions.

14. Ballast for a discharge lamp (L) having a dielectric layer between at least one electrode and a discharge medium,
having a power-supplied primary circuit (P), a secondary circuit (S) for the discharge lamp (L) and also a transformer (T) which connects the primary circuit (P) to the secondary circuit (S),
**characterized in that** the ballast is a combined flyback converter/forward converter and has a switching device (T_{Q}, SE) in the primary circuit (P), which switching device is designed for interrupting the primary-circuit-side current flow (I_{W1}) through the transformer (T) for the purpose of impressing a voltage pulse into the secondary circuit (S) in order to generate in the discharge lamp (L) an external voltage (U_{L}) - effecting an ignition - and a counterpolarization, and for then switching on again the primary-side current flow (I_{W1}) through the transformer (T) in order, by means of a countervoltage pulse, to withdraw from the discharge lamp (L) the charge effecting the external voltage (U_{L}) across the discharge lamp and to effect a back ignition with the aid of the internal counterpolarization in the discharge lamp (L).

15. Ballast according to Claim 14, in which the primary circuit (P) is supplied with power from a source (Q) with ceramic multilayer capacitors (C_{Q}).

16. Ballast according to Claim 14 or 15, in which the transformer (T) has a center tap on the secondary side.

17. Ballast according to Claim 14, 15 or 16, designed for a method according to Claim 2 or 5.

18. Illumination system having a discharge lamp (L) having a dielectric layer between at least one electrode and a discharge medium and a ballast according to one of Claims 14-17.

19. Illumination system according to Claim 18, designed to the effect that the transformer (T) of the ballast is demagnetized by the back ignition.

20. Illumination system according to Claim 18 or 19, in which the natural frequency of the secondary circuit (S) is less than 20 kHz.

## Revendications

1. Procédé pour faire fonctionner une lampe (L) à décharge ayant une couche diélectrique entre au moins une électrode et un milieu de décharge,
en utilisant un ballast ayant un circuit ( P ) primaire alimenté en puissance, un circuit ( S ) secondaire comportant la lampe (L) à décharge ainsi qu'un transformateur ( T ) reliant le circuit ( P ) primaire au circuit ( S ) secondaire,
procédé dans lequel il est appliqué au circuit (S) secondaire, à partir du circuit (P) primaire par l'intermédiaire du transformateur (T), une impulsion de tension, qui donne une tension (U_{L}) extérieure provoquant un amorçage sur la lampe (L) à décharge et une contre polarisation intérieure dans la lampe (L) à décharge,
et après l'amorçage par la tension (U_{L}) extérieure, une contre impulsion de tension est appliquée suffisamment tôt à partir du circuit (P) primaire dans le circuit (S) secondaire en passant par le transformateur (T) et la charge provoquant la tension (U_{L}) extérieure s'appliquant encore à la lampe (L) à décharge est retirée, jusqu'à ce que la contre polarisation intérieure dans la lampe ( L ) à décharge entraîne le rétro-amorçage,
**caractérisé en ce que** l'impulsion de tension est appliquée suivant le principe du découpage à récupération et la contre impulsion de tension est appliquée suivant le principe du convertisseur de flux du circuit ( P ) primaire au circuit ( S ) secondaire.

2. Procédé suivant la revendication 1, dans lequel, après le rétro-amorçage par la contre polarisation intérieure, on autorise davantage le flux de courant du côté du circuit primaire dans le transformateur ( T ), pour rendre possible un reflux de l'énergie qui reste après le rétro-amorçage du circuit ( S ) secondaire au circuit (P) primaire, jusqu'à arriver à nouveau à une application de l'impulsion de tension dans le circuit ( S ) secondaire.

3. Procédé suivant l'une des revendications précédentes, dans lequel la contre impulsion de tension est appliquée si tôt dans le circuit (S) secondaire que l'amorçage par la tension (U_{L}) extérieure et le rétro-amorçage agissent sous la forme d'une impulsion unitaire de puissance active d'un procédé d'injection pulsée de puissance active.

4. Procédé suivant l'une des revendications précédentes, dans lequel la fréquence des oscillations du circuit ( S ) secondaire est si petite et la contre impulsion de tension est appliquée si tard dans le circuit ( S ) secondaire que le laps de temps entre l'amorçage de la tension (U_{L}) extérieure et le rétro-amorçage sert de temps mort d'un procédé d'injection pulsée de puissance active.

5. Procédé suivant l'une des revendications précédentes, dans lequel le transformateur ( T ) du ballast est démagnétisé par le rétro-amorçage.

6. Procédé suivant l'une des revendications précédentes, dans lequel le ballast électronique est cadencé par un interrupteur (T_{Q}) dans le circuit (P) primaire.

7. Procédé suivant l'une des revendications précédentes, dans lequel le circuit ( P ) primaire est alimenté en puissance à partir d'une source ayant des condensateurs (C_{Q}) céramiques à plusieurs couches.

8. Procédé suivant l'une des revendications précédentes, dans lequel on utilise dans le circuit (S) secondaire une prise médiane du transformateur (T) comme potentiel de référence.

9. Procédé suivant l'une des revendications précédentes, dans lequel le ballast est conçu de façon à appliquer à la lampe (L) à décharge des tensions (U_{L}) extérieures ayant un signe qui alterne d'une impulsion de tension à l'autre.

10. Procédé suivant la revendication 9, dans lequel le sens du courant (I_{W1}) du côté du circuit primaire dans le transformateur (T) alterne d'une impulsion de tension à l'autre.

11. Procédé suivant la revendication 10, dans lequel le transformateur a deux enroulements (W1) du côté du circuit primaire, qui sont associés respectivement à l'un des deux sens de courant.

12. Procédé suivant les revendications 8 et 10, dans lequel le circuit primaire a deux interrupteurs (T_{Q}), qui cadencent respectivement le courant dans l'un des deux enroulements (W1).

13. Procédé suivant l'une des revendications 10 à 12, dans lequel le circuit primaire est alimenté à partir d'une source de courant alternatif, qui charge en alternance par demi-période deux condensateurs accumulateurs, chaque condensateur accumulateur étant affecté respectivement à l'un des deux sens du courant.

14. Ballast pour une lampe (L) à décharge ayant une couche diélectrique entre au moins une électrode et un milieu de décharge,
comprenant un circuit (P) primaire alimenté en puissance, un circuit ( S ) secondaire pour la lampe ( L ) à décharge ainsi qu'un transformateur ( T ) reliant le circuit ( P ) primaire au circuit ( S ) secondaire,
**caractérisé en ce que** le ballast est un convertisseur à découpage à récupération/convertisseur de flux combiné et a un dispositif (T_{Q}, SE) d'interruption dans le circuit (P) primaire, qui est conçu pour interrompre le flux (I_{W1}) de courant du côté du circuit primaire passant dans le transformateur ( T ), pour appliquer une impulsion de tension dans le circuit (S) secondaire, afin de produire dans la lampe (L) à décharge une tension (U_{L}) extérieure provoquant un amorçage et une contre polarisation et pour ensuite réinjecter le flux ( IW1 ) de courant du côté primaire dans le transformateur (T), pour retirer de la lampe (L) à décharge par une contre impulsion de tension la charge provoquant la tension (U_{L}) extérieure sur la lampe (L) à décharge et provoquer un rétro-amorçage à l'aide de la contre polarisation intérieure dans la lampe ( L ) à décharge.

15. Ballast suivant la revendication 14, dans lequel le circuit ( P ) primaire est alimenté par une source (Q) ayant des condensateurs (C_{Q}) céramiques à plusieurs couches.

16. Ballast suivant la revendication 14 ou 15, dans lequel le transformateur ( T ) a du côté secondaire une prise médiane.

17. Ballast suivant la revendication 14, 15 ou 16, conçu pour un procédé suivant la revendication 2 ou 5.

18. Système d'éclairage ayant une lampe ( L ) à décharge comprenant une couche diélectrique entre au moins une électrode et un milieu de décharge, et
un ballast suivant l'une des revendications 14 à 17.

19. Système d'éclairage suivant la revendication 18, conçu de manière à être démagnétisé par le rétro-amorçage du transformateur ( T ) du ballast.

20. Système d'éclairage suivant la revendication 18 ou 19, dans lequel la fréquence propre du circuit (S) secondaire est plus petite que 20 kHz.
